# EUROPEAN PATENT APPLICATION

(11) **EP 4 815 212 A1**
(43) Date of publication of application: **30.09.2026**
(21) Application number: 26167017.8
(22) Date of filing: 24.03.2026
(51) Int. Cl.: H01R 13/04, B60L 53/16, H01R 13/66, H01R 11/05, H01R 13/405

(54) **CONTACT ASSEMBLY, CONTACT BUNDLE AND PLUGGING DEVICE**

(30) Priority: 25.03.2025 DE 102025111473
(71) Applicant: TE Connectivity Solutions GmbH, 8200 Schaffhausen (CH)
(72) Inventor: HELLER, Christian, 8200 Schaffhausen (CH); RAAB, Stefan, 8200 Schaffhausen (CH); BRAUN, Stefan, 8200 Schaffhausen (CH); KRAENZLEIN, Harald, 8200 Schaffhausen (CH)
(74) Representative: Grünecker Patent- und Rechtsanwälte PartG mbB

(57) **Abstract**

The invention relates to a contact assembly (1) for a plugging device (2) of a charger, wherein the contact assembly (1) is configured to be held in the plugging device (2) and to be contacted by a mating contact (6) of the charger, wherein the contact assembly (1) comprises an electrically conductive contact element (8) and a holding body (10) that surrounds the contact element (8) at least in part from outside, wherein the holding body (10) comprises at least one other material than the contact element (8). The use of different materials for the holding body (10) and the contact element (8) and the resulting flexibilized material selection leads to freedom of design. The invention further relates to a contact bundle (4) and a plugging device (2).

## Description

The present invention relates to a contact assembly for a plugging device of a charger. Furthermore, the present invention relates to a contact bundle composed of at least two such contact assemblies. Additionally, the present invention relates to a plugging device, for example, a charging plug or a charging socket of a charging system for electric vehicles.

Here, electric vehicles are understood to be purely electrically operated vehicles or vehicles that have an electric drive as a partial drive, such as hybrid vehicles, in particular plug-in hybrids. Regardless of their size, electric vehicles can include passenger cars, trucks and commercial vehicles, also for agriculture and forestry.

In numerous fields of electromobility, plugging devices are used to create detachable connections for the transmission of electric currents and/or signals. An effort is made to design the plugging devices as cost-effective and lightweight as possible, in particular in the charging environment of electric vehicles, where stationary as well as vehicle-mounted plugging devices are employed.

The present invention is therefore based on the object of creating a possibility for cost and weight savings in plugging devices.

This object is satisfied by a contact assembly for a plugging device of a charger, wherein the contact assembly is configured to be held in the plugging device and to be contacted by a mating contact of the charger, wherein the contact assembly comprises an electrically conductive contact element and a holding body that surrounds the contact element at least in part from the outside, wherein the holding body comprises at least one other material than the contact element.

In other words, the holding body and the contact element are manufactured from different materials. Here, the at least one material of the holding body differs from any material of the contact element if it comprises at least one component that is absent in the materials of the contact element or if it lacks components that are present in the materials of the contact element, respectively. This means the at least one material of the holding body differs in chemical composition from all materials of the contact element.

The advantage achieved with the present invention is based on the flexibilized material selection, which results from the use of different materials for the holding body and the contact element, as well as on the freedom of design thus obtained. Consequently, with the contact assembly according to the invention, a functional division can be made by having the holding body assume, for example, a mechanical function of holding the contact assembly, whereas the contact element fulfills an electrical function. Accordingly, the contact element can be made of an electrically highly conductive and consequently expensive material, whereas the holding body is manufactured from a more cost-effective material. In the same way, the holding body can also be manufactured from a lighter material than the contact element, so that not only cost savings but also weight savings can be obtained with the contact assembly according to the invention.

The object set out at the outset is also satisfied by a plugging device with at least one contact assembly according to the invention and a housing, wherein the housing comprises a contact chamber for receiving the at least one contact assembly, and wherein the holding body of the at least one contact assembly abuts against an inner wall of the contact chamber. Here, the plugging device benefits from the functions and advantages of the contact assembly according to the invention and thus enables cost and weight savings. In particular, the abutment against the inner wall enables the holding body of the at least one contact assembly to fulfill the above-mentioned mechanical function in the contact chamber.

The plugging device can be a standardized charging plug or a standardized charging socket of a charging system for electric vehicles. The charging system can be operated with direct current, operated with alternating current or operated with three-phase current.

The invention can be further improved by the following configurations which are advantageous by themselves and which may be combined with one another at random.

According to a first possible embodiment, the holding body can be attached captively, synonymously undetachably, to the contact element. In other words, the holding body and the contact element in this embodiment cannot be separated from one another without destroying them. This facilitates assembling the contact assembly, since the contact element and the holding body form a unit, instead of separate components that must be handled individually.

Alternatively or additionally, the holding body can be attached to the contact element in an torsion-proof, synonymously anti-rotation manner. That means that the holding body in this embodiment is not rotatable relative to the contact element without destroying them, so that in particular an angular position of the contact element can be fixed. This is advantageous when, for example, the contact element has a polarization feature and therefore must be in a specific angular position in order to fit to the mating contact of the charger. A fixed angular position of the contact element is likewise advantageous when the contact element has a thread. "Free spinning" of the contact element while tightening to a mating thread can thus be prevented.

The anti-rotation lock between the holding body and the contact element can be achieved in a simple manner if the holding body and the contact element enter into a rotationally non-symmetrical positive-fit connection. For example, the contact element can have at least one rotationally non-symmetrical outer surface, for example, on a flattened outer side. The holding body can surround this at least one rotationally non-symmetrical outer surface and nestle thereagainst in a positive-fit manner. In particular, the contact element can have two flattened outer sides that are disposed opposite one another with respect to the contact element and face away from one another. The holding body can engage around these two flattened outer sides in a positive-fit manner in order to achieve a stable anti-rotation lock.

Furthermore, the flattened outer sides of the contact element can each have a roughened, grooved and/or knurled surface in order to additionally be able to enter into a frictionally engaged connection to the holding body.

Optionally, the at least one material of the holding body can penetrate the contact element at least in part. In particular, the at least one material of the holding body can completely penetrate the contact element. In other words, the at least one material of the holding body can enter at least in part into a recess on the contact element or pass through a passage opening in the contact element. The anti-rotation lock between the holding body and the contact element can also be realized in this way.

For this purpose, it is advisable that the holding body be made of easily castable plastic material. For example, the holding body can be manufactured from plastic material, silicone or other polymer material. The contact element can in turn be made of metal, for example, alloyed from copper and/or aluminum. In particular, the contact element can be overmolded with the holding body. In other words, the contact assembly can be a multi-component injection-molded part. This embodiment is advantageous because the overmolding results in good adhesion between the holding body and the contact element, which prevents the penetration of moisture and soiling between the holding body and the contact element. Repair and maintenance costs to be expected can then be reduced.

Accordingly, the object set out at the outset is also satisfied by the use of an overmolded plastic body for holding a metal contact in the plugging device of the charger.

As an alternative to overmolding, the holding body can be printed onto the contact element using a 3D printer. Furthermore, the holding body can alternatively be assembled onto the contact element, for example, mounted on or clipped on. For this purpose, the holding body can have two halves, each forming half of a receptacle for the contact element. The two halves of the holding body can be connected by way of an (integral) hinge and/or be attached to one another by latching elements.

According to a further alternative embodiment, the holding body can also be manufactured from a metal that is, however, more easily processable or machinable than the metal of the contact element. The holding body made of metal can likewise be applied to the contact element by 3D printing, by two-component casting, or as two halves. The use of a holding body made of metal can make sense especially for applications with expected high operating temperatures.

For the attachment of the contact assembly in the housing of the plugging device, the holding body can have at least one shoulder with which the holding body can enter into a positive-fit connection to the housing of the plugging device.

In addition to the anti-rotation lock between the holding body and the contact element, it can also make sense to also realize an anti-rotation lock between the holding body and the housing of the plugging device. For this purpose, the holding body can have a rotationally non-symmetrical outer surface at least in sections. This rotationally non-symmetrical outer surface can be, for example, a flattened outer side of the holding body that allows for the holding body to have a rotationally non-symmetrical positive-fit connection to the housing of the plugging device. For example, the holding body can abut with its rotationally non-symmetrical outer surface against the inner wall of the contact chamber of the housing.

The flattened outer side of the holding body can furthermore have a grip surface for temporarily gripping the contact assembly. This simplifies manual handling of the contact assembly by assembly staff as well as automated handling by an assembly robot.

As shall be explained in more detail hereafter, the holding body made of plastic material or of an easily processable metal can fulfill additional functions.

According to a possible embodiment, the holding body can comprise at least one sealing lip that extends away from the contact element. The at least one sealing lip can be a circumferential bead-like projection with which the holding body abuts against the housing of the plugging device and thus achieves a sealing effect. In particular, the at least one sealing lip can abut in a fluid-tight manner against the inner wall of the contact chamber of the housing. Consequently, no O-ring or other seals need to be provided. Accordingly, the assembly effort for placing a separate seal onto the contact element is saved. In addition, it can be prevented that the separate seal is damaged during this placement.

According to a further possible embodiment, the holding body can comprise a sensor receptacle for a temperature sensor extending toward the contact element and accessible from outside. The sensor receptacle can be a recess that extends as a cavity through the at least one material of the holding body. The sensor receptacle can be configured accordingly to receive at least one measuring tip of the temperature sensor. Due to the sensor receptacle, the temperature sensor required for temperature monitoring of the charger can be positioned precisely and reliably relative to the contact element.

The sensor receptacle can optionally extend through the holding body to the contact element. The measuring tip of the temperature sensor can directly touch the contact element at a bottom of the sensor receptacle. This increases the measuring accuracy and the measuring speed, since the holding body represents no thermal resistance and therefore causes no time delay (dead time) when measuring.

The holding body can also serve active cooling of the contact element. For this purpose, at least one cooling channel can be formed in the holding body for passing a flow of cooling fluid. For example, the cooling channel can have a cooling fluid supply line and a cooling fluid return line that is connected to the cooling fluid supply line in a manner conducting fluid. Furthermore, ports for the cooling fluid supply and return lines can be provided at the holding body. The cooling channel can extend around the contact element between the cooling fluid supply and return lines.

According to a further possible embodiment, the contact assembly can comprise an RFID transponder that is disposed in the holding body. For example, the RFID transponder can be embedded in the at least one material of the holding body. In particular when the holding body is made of plastic material, the embedding of the RFID transponder can be easily realized. The RFID transponder in the holding body simplifies the automation of the assembly and also supports the repair of the charger, since the suitable replacement part for the contact assembly can be more easily identified due to the RFID transponder.

The contact element can optionally comprise a contact section for contacting the mating contact. Furthermore, the contact element can comprise a connection section for connecting the contact element to an electrical conductor of the charger. The contact section can be a tip of the contact element configured in a pin shape or sleeve shape that faces away from the electrical conductor of the charger and is accessible to the mating contact. At the connection section, the contact assembly is configured to be directly connected to the electrical conductor of the charger.

For example, a bus bar or an electrical cable can be used as the electrical conductor. The electrical conductor is optionally made of the same metal as the contact element. Due to this material equality then obtained, the connection between the contact element and the electrical conductor is particularly advantageous from an electrochemical perspective because it is less susceptible to galvanic corrosion. The above-mentioned embodiment of the contact element containing aluminum is therefore particularly well suited for a combination with aluminum bus bars, whose use in the field of electromobility is steadily increasing. The contact element made of copper or a copper alloy is particularly well suited for the connection to a copper cable and facilitates, for example, welding processes due to material equality.

Accordingly, the connection section can form a welding flag or welding tab. Alternatively, the connection section can have an external thread. The contact assembly can be screwed to the electrical conductor using the external thread and a separate (union) nut. Compared to a connection section that has a bore with an internal thread, the use of an external thread saves material. Instead of an external thread, the connection section can of course also have a bore with an internal thread for a corresponding fastening screw.

As an alternative to the direct connection of the contact element to the electrical conductor of the charger by way of the connection section, the contact element can also be connected without contact (i.e., capacitively or inductively) to the remainder of the charger. Consequently, the connection section can also be omitted if a capacitive or inductive connection of the contact element is sufficient. Such a contact element with a contactless connection without the connection section can be used, for example, for position verification of the plugging device.

According to a further possible embodiment, the contact section and/or the connection section can protrude from the holding body in opposite directions. For example, the contact section can point in a plugging direction, while the connection section is oriented opposite to this plugging direction. Overall, the contact element can extend in an elongate manner along the plugging direction. Here, the contact element is elongate when one dimension or extension is many times larger, for example five times, preferably four times, at least three times larger than the remaining dimensions or extensions of the contact element.

The holding body can surround the contact element in a radial direction perpendicular to the plugging direction. It is advisable to have the contact section and the connection section be located on opposite sides of the contact element or the contact assembly with respect to the holding body. By positioning the holding body between the contact section and the connection section, the contact assembly can be held as close as possible to its own center of gravity. In addition, by this positioning, the holding body can assume the sealing function between the contact section, which must be accessible from outside the plugging device, and the connection section, which is arranged in the watertight interior of the plugging device. Alternatively, the contact section and the connection section can be located on the same side of the contact element with respect to the holding body.

In analogy to the contact section and the connection section, the holding body can be disposed on a mount section of the contact assembly. The contact assembly is attached in the housing of the plugging device at this mount section. The mount section can optionally have a core that connects the contact section to the connection section in an electrically conductive manner. The core of the mount section is then part of the contact element. In addition, the mount section can have a covering or shell that surrounds the core at least in part from the outside. The covering or shell of the mount section therefore corresponds to the holding body. Here, the materials of the core and the covering or shell differ.

According to a further possible embodiment, the contact element can comprise at least one flange that projects beyond the holding body. For example, the flange can be a radial flange that projects beyond the holding body in the radial direction. In other words, the flange can have a larger outer diameter than the holding body. The flange can be arranged adjacent to the connection section and there provide an abutment surface for the electrical conductor of the charger.

Optionally, the contact element can have two such flanges that enclose the holding body and thus hold it captively. Alternatively, the ratio of the outer diameters can be reversed so that the holding body projects beyond the flange.

To simplify simultaneously handling multiple contact elements, a contact bundle with at least two contact assemblies according to the invention can be provided. In the contact bundle, the holding bodies of the at least two contact assemblies can be connected in a positive substance-fit, synonymously materially bonded, manner. In particular, the holding bodies of the at least two contact assemblies can be formed integrally and monolithically. The contact bundle consequently also satisfies the object set out at the outset because it can contribute to cost savings when mounting the plugging device due to facilitated handling.

The object set out at the outset is furthermore satisfied by an electric vehicle, wherein the electric vehicle comprises a plugging device according to one of the preceding embodiments, wherein the plugging device is configured as a charging socket for connecting to a charging plug of a charging cable.

The object set out at the outset is also satisfied by a charging station for an electric vehicle, wherein the charging station comprises a plugging device according to one of the preceding embodiments and a charging cable, wherein the plugging device is configured as a charging plug on the charging cable for connecting to the charging socket of the electric vehicle.

The charging station can be, for example, a public charging column. In particular, the charging station can be a fast charging station. The charging station can be configured to electrically charge an energy storage device of the connected electric vehicle via the charging cable, the charging plug and the charging socket in a charging operating state.

The invention shall be explained hereafter in more detail with reference to the drawings on the basis of several embodiments, the different features of which may be combined with one another as required in accordance with the above observations,
where:
- Fig. 1: shows a schematic perspective illustration of a contact assembly according to an exemplary embodiment;
- Fig. 2: shows a schematic perspective illustration of the contact assembly according to a further exemplary embodiment;
- Fig. 3: shows a schematic perspective explosion illustration of the contact assembly according to a further exemplary embodiment;
- Fig. 4: shows a schematic sectional illustration of the contact assembly from Figure 3 along section plane IV-IV;
- Fig. 5: shows a further schematic sectional illustration of the contact assembly from Figure 3 with an electrical conductor;
- Fig. 6: shows a schematic sectional illustration of the contact assembly according to a further exemplary embodiment with a mating contact;
- Fig. 7: shows a schematic perspective illustration of the contact assembly according to a further exemplary embodiment;
- Fig. 8: shows a schematic perspective explosion illustration of the contact assembly according to a further exemplary embodiment;
- Fig. 9: shows a schematic perspective illustration of a plugging device of the invention according to an exemplary embodiment; and
- Fig. 10: shows a schematic perspective illustration of a contact bundle according to an exemplary embodiment.

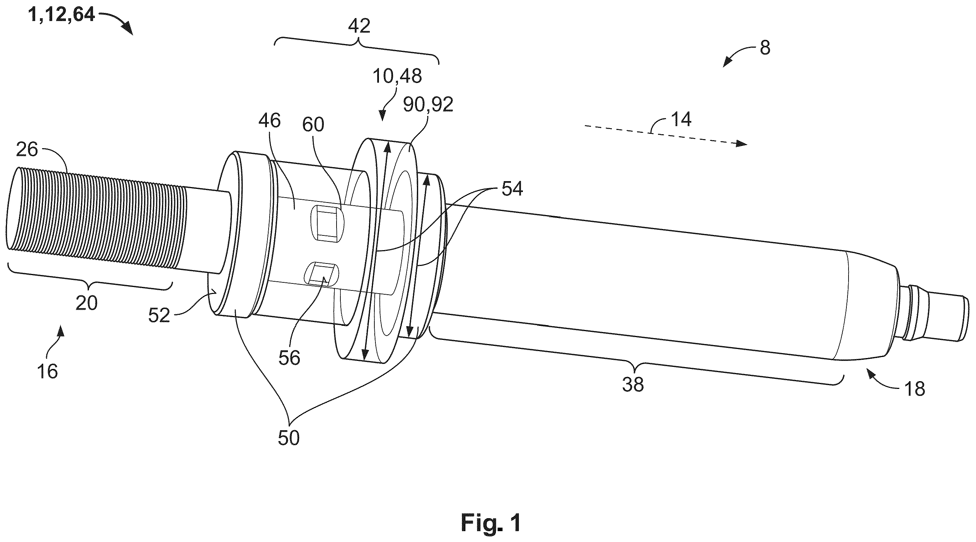

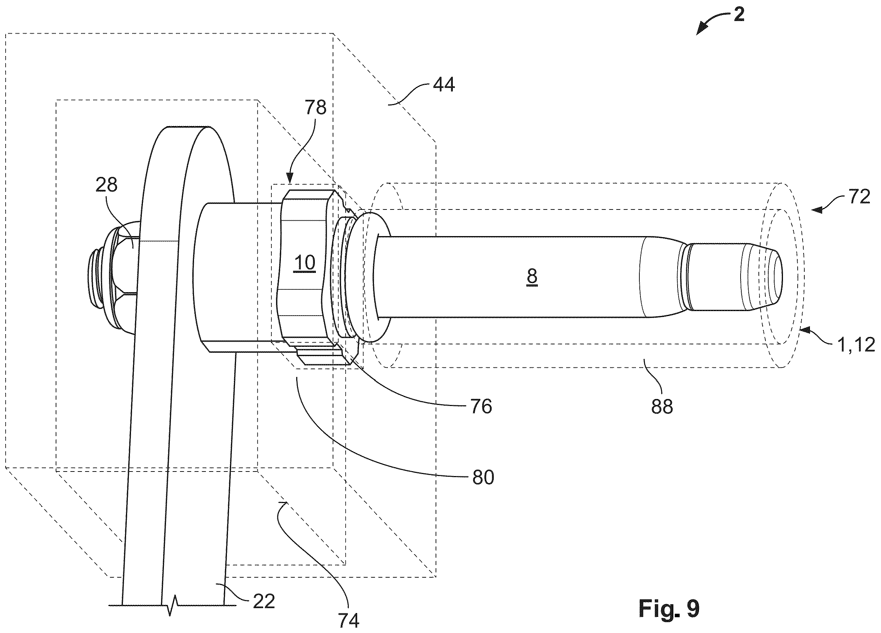

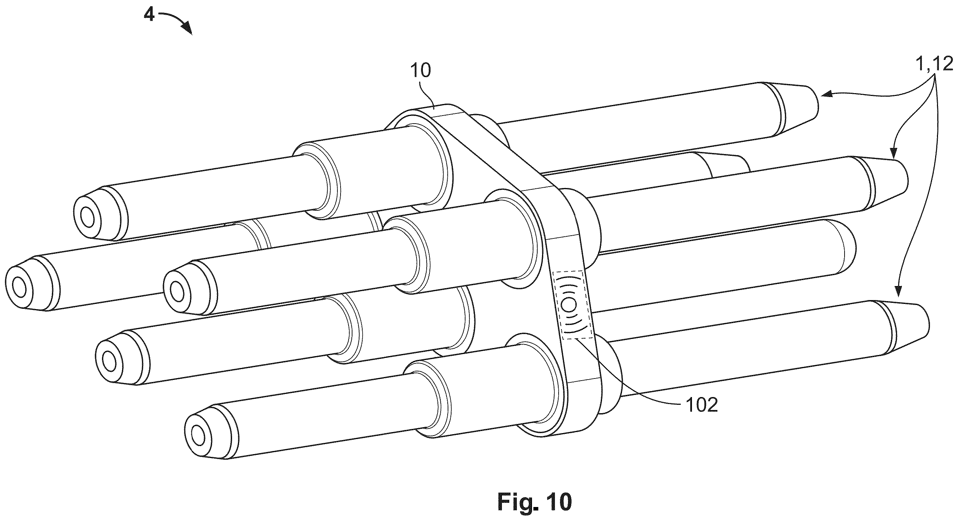

First, the schematic structure of possible embodiments of a contact assembly 1 shall be explained with reference to Figures 1 to 8. Thereafter, the schematic structure of a possible embodiment of a plugging device 2 shall be described with reference to Figure 9. Finally, the schematic structure of a contact bundle 4 shall be explained using Figure 10.

Contact assembly 1 as well as contact bundle 4 are each configured to be held in plugging device 2 of a charger and to be contacted by a mating contact 6 or multiple mating contacts of the charger.

For this purpose, contact assembly 1 comprises an electrically conductive contact element 8 and a holding body 10 at least in part surrounding contact element 8 from the outside. Here, holding body 10 and contact element 8 are manufactured from different materials. In other words, holding body 10 has at least one different material than contact element 8. This means the at least one material of holding body 10 differs from any material of contact element 8 in chemical composition.

Contact element 8 can in particular be manufactured from metal, for example, alloyed from copper and/or aluminum. Holding body 10 can likewise also be manufactured from a metal that, however, is more easily processable or machinable than the metal of contact element 8. Alternatively, holding body 10 can be manufactured from an easily castable plastic material, for example plastic, silicone or another polymer material.

As shown in Figure 1, contact assembly 1 can be configured as a contact pin 12. For this purpose, contact element 8 can extend in an elongate or pin-shaped manner along a plugging direction 14 from a base or attachment member 16 to a tip 18. In the installed state of contact assembly 1, attachment member 16 of contact element 8 is directed toward the interior of plugging device 2, while tip 18 of contact element 8 faces outwardly (see Figure 9).

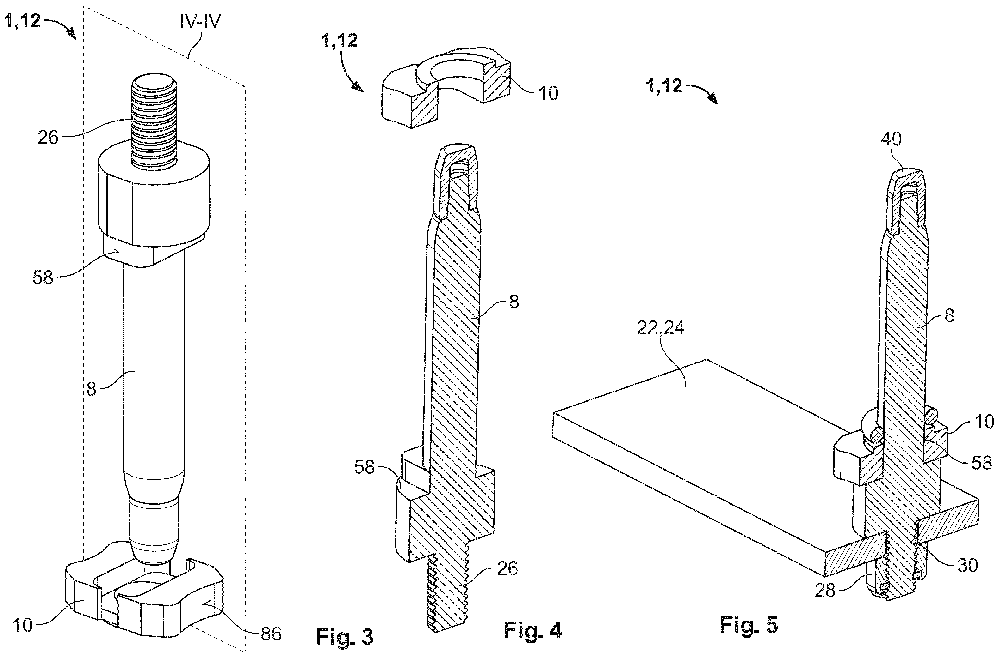

Attachment member 16 of contact element 8 can represent a connection section 20 for connecting contact element 8 to an electrical conductor 22 (see Figure 5) of the charger. A bus bar 24 or an electrical cable (not shown) can be used as electrical conductor 22.

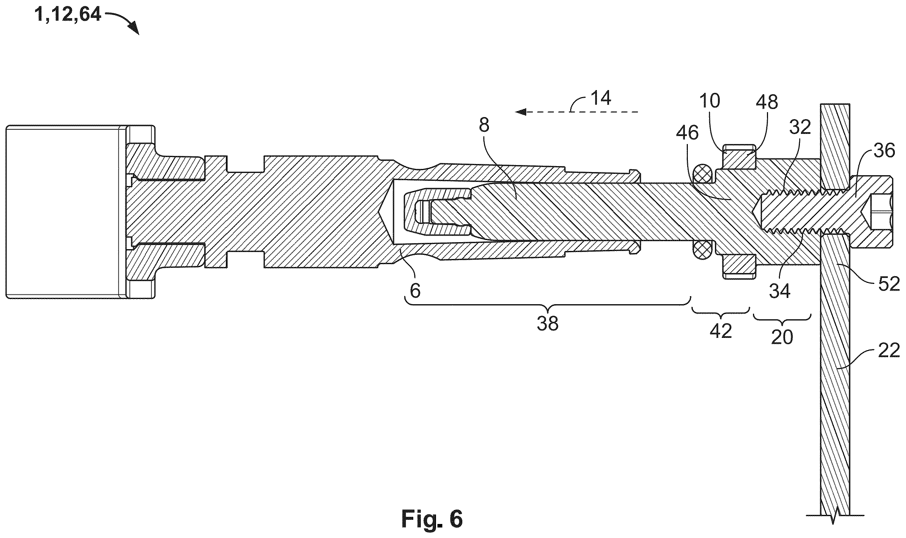

As shown in Figures 1 to 5, connection section 20 can have an external thread 26. Contact assembly 1 can be screwed tight in a passage opening 30 of electrical conductor 22 by external thread 26 and a separate fastening nut 28 (see Figure 5). Instead of an external thread 26, connection section 20 can alternatively also have a bore 32 with an internal thread 34 for a corresponding fastening screw 36 (see Figure 6). According to a further alternative embodiment not shown, connection section 20 can form a welding flag or welding tab by way of which contact element 8 can be welded to electrical conductor 22.

Tip 18 of contact element 8 faces away from electrical conductor 22 of the charger and is arranged accessible for mating contact 6. In particular, tip 18 of contact element 8 can represent a contact section 38 for contacting mating contact 6 (see Figure 6). Contact section 38 can optionally have a coating.

A touch guard cap 40 can optionally be attached to tip 18 of contact element 8. According to an alternative embodiment, tip 18 can also be configured to be sleeve-shaped. In this case, contact assembly 1 serves as a contact sleeve.

Holding body 10 can be arranged between connection section 20 and contact section 38. In other words, connection section 20 and contact section 38 can be disposed on opposite sides of contact element 8 or contact assembly 1 with respect to holding body 10. In particular, connection section 20 and/or contact section 38 can protrude from holding body 10 in opposite directions.

In analogy to contact section 38 and connection section 20, holding body 10 can be disposed on a mount section 42 of contact assembly 1. Contact assembly 1 is attached in a housing 44 of plugging device 2 at this mount section 42. Mount section 42 can optionally have a core 46 that connects contact section 38 to connection section 20 in an electrically conductive manner. Core 46 of mount section 42 is then part of contact element 8. In addition, mount section 42 can have a shell 48 that surrounds core 46 at least in part from the outside. Shell 48 of mount section 42 therefore corresponds to holding body 10. Here, the materials of core 46 and shell 48 differ.

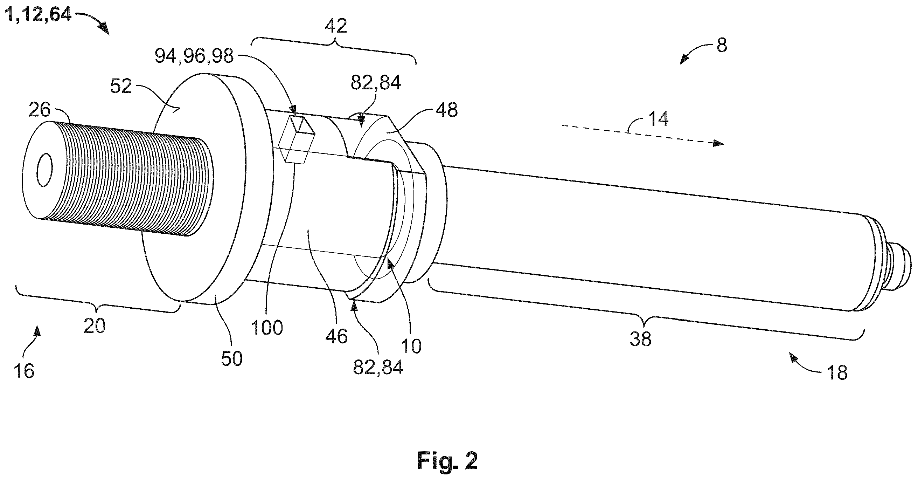

As shown in Figure 1, contact element 8 can have two flanges 50. One of flanges 50 can be arranged adjacent to connection section 20 and provide an abutment surface 52 there for electrical conductor 22 of the charger. Furthermore, flanges 50 can enclose holding body 10 and thereby hold it captively. Holding body 10 can there project beyond flanges 50. In other words, holding body 10 can have a larger outer diameter 54 than flanges 50. Alternatively, the ratio of the outer diameters can be reversed so that at least one flange 50 projects beyond holding body 10 (see Figure 2).

Alternatively or additionally, holding body 10 can be attached to contact element 8 in an anti-rotation, torsion-proof, manner. That means that holding body 10 in this embodiment is not rotatable relative to contact element 8 without destroying them, so that in particular an angular position of contact element 8 can be affixed by way of holding body 10. The affixed angular position of contact element 8 prevents contact element 8 from "freely spinning" while tightening external thread 26 with fastening nut 28.

The anti-rotation lock between holding body 10 and contact element 8 can be achieved by a rotationally non-symmetrical positive-fit connection. For example, contact element 8 can have at least one rotationally non-symmetrical outer surface 56, for example, on a flattened outer side 58 (see Figures 3 and 4). Holding body 10 can surround this at least one rotationally non-symmetrical outer surface 56 and nestle thereagainst in a positive-fit manner (see Figure 5). In particular, contact element 8 can have two flattened outer sides 58 that are disposed opposite one another with respect to contact element 8 and face away from one another. Holding body 10 can engage around these two flattened outer sides 58 in a positive-fit manner in order to achieve a stable anti-rotation lock.

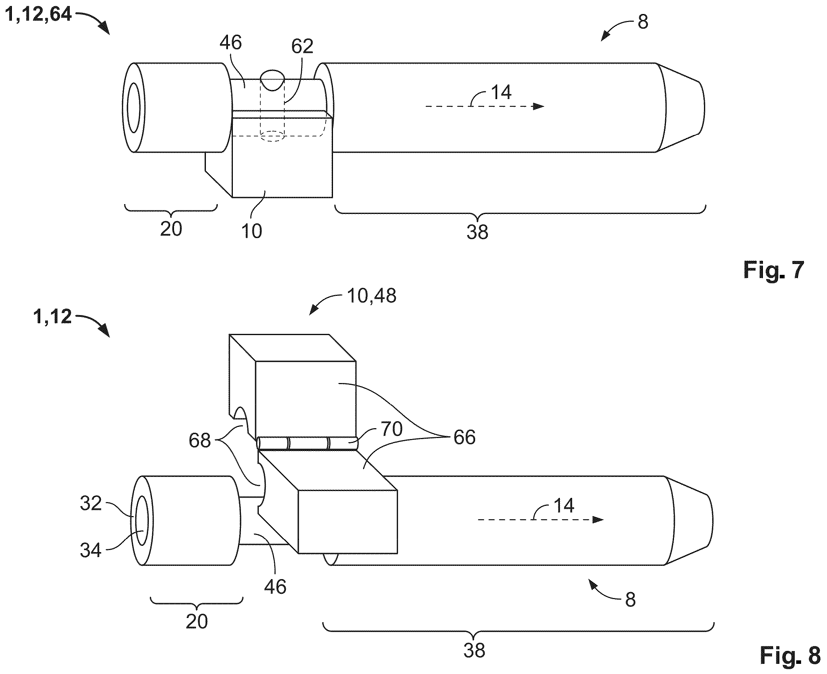

Figure 7 shows an alternative possibility for realizing the anti-rotation lock between holding body 10 and contact element 8. The at least one material of holding body 10 can then penetrate contact element 8 at least in part. In particular, the at least one material of holding body 10 can completely penetrate contact element 8. In other words, the at least one material of holding body 10 can enter at least in part into a recess 60 at contact element 8 or pass through a passage opening 62 in contact element 8. It is then evident that holding body 10 need not completely surround contact element 8, but surrounding only in part can also suffice.

To achieve this, contact element 8 can be overmolded with holding body 10. Consequently, contact assembly 1 can be a multi-component injection-molded part 64. This embodiment is advantageous since the overmolding results in to good adhesion between holding body 10 and contact element 8.

As an alternative to overmolding, holding body 10 can be assembled onto contact element 8, for example, mounted on or clipped on. For this purpose, holding body 10 can have two halves 66 (see Figure 8) each forming half of receptacle 68 for contact element 8. The two halves 66 of holding body 10 can be connected by way of a hinge 70 and/or be attached to one another by latching elements (not shown). Furthermore, holding body 10 can alternatively be printed onto contact element 8 using a 3D printer (not shown).

In Figure 9, plugging device 2 is shown by way of example with a contact assembly 1. Contact assembly 1 is installed in housing 44 of plugging device 2. In particular, housing 44 can comprise a contact chamber 72 for receiving contact assembly 1, wherein holding body 10 of contact assembly 1 abuts against an inner wall 74 of contact chamber 72. For attachment of contact assembly 1 in housing 44, holding body 10 can have a shoulder 76 with which holding body 10 can enter into a positive-fit connection 78 with housing 44. Shoulder 76 of holding body 10 can be, for example, inserted into a matching depression 80 on inner wall 74 of contact chamber 72.

An anti-rotation lock can be created also between holding body 10 and housing 44. For this purpose, holding body 10 can have a rotationally non-symmetrical outer surface 82 at least in sections. This rotationally non-symmetrical outer surface 82 can be, for example, a flattened outer side 84 of holding body 10 that allows for holding body 10 to have a rotationally non-symmetrical positive-fit connection with housing 44. For example, holding body 10 can abut with its rotationally non-symmetrical outer surface 82 against inner wall 74 of contact chamber 72. Flattened outer side 84 of holding body 10 can optionally have a grip surface 86 for temporarily gripping contact assembly 1.

As indicated in Figure 9, contact section 38 of contact element 8 can be surrounded by a touch guard collar 88 of housing 44 that is accessible to mating contact 6.

Of course, plugging device 2 can also comprise two or more contact assemblies 1. If plugging device 2 is part of a charging system operated with direct current, for example, two contact assemblies 1 can be provided, one as positive contact (DC+), the other as negative contact (DC-). In charging systems operated with alternating current or three-phase current, contact assemblies are provided respectively for the neutral conductor, the grounding conductor and a respective number of phase conductors.

If multiple contact assemblies 1 are provided, it is advisable to use contact bundle 4 from Figure 10. Multiple contact assemblies 1 are contained there and are integrally connected to one another by way of their holding bodies 10. In particular, holding bodies 10 of all contact assemblies 1 can be formed integrally and monolithically.

Holding body 10 made of plastic material or of an easily processable metal can furthermore fulfill the functions explained below.

Holding body 10 can comprise at least one sealing lip 90 that extends away from contact element 8. The at least one sealing lip 90 can be a circumferential, bead-like projection 92 with which holding body 10 abuts against housing 44 of the plugging device and thus achieves a sealing effect. In particular, at least one sealing lip 90 can abut in a fluid-tight manner against inner wall 74 of contact chamber 72.

According to a further possible embodiment, holding body 10 can comprise a sensor receptacle 94 for a temperature sensor extending toward contact element 8 and accessible from outside (not shown). Sensor receptacle 94 can be a recess 96 that extends as a cavity 98 through the at least one material of holding body 10. Sensor receptacle 94 can be configured accordingly to receive at least one measuring tip of the temperature sensor.

Sensor receptacle 94 can optionally extend through holding body 10 up to contact element 8. The measuring tip of the temperature sensor can directly touch contact element 8 at a bottom 100 of sensor receptacle 94.

Furthermore, contact assembly 1 can comprise an RFID transponder 102 that is disposed in holding body 10. For example, RFID transponder 102 can be embedded in at least one material of holding body 10 (see Figure 10). In particular when holding body 10 is made of plastic material, the embedding of RFID transponder 102 can be easily realized.

According to an embodiment not shown, holding body 10 can also serve active cooling of contact element 8. For this purpose, at least one cooling channel can be formed in holding body 10 for passing a cooling fluid. For example, the cooling channel can have a cooling fluid supply line and a cooling fluid return line that is connected to the cooling fluid supply line in a manner conducting fluid. Furthermore, ports for the cooling fluid supply and return lines can be provided at holding body 10. The cooling channel can extend around contact element 8 between the cooling fluid supply and return lines.

### Reference Numerals

- 1: contact assembly
- 2: plugging device
- 4: contact bundle
- 6: mating contact
- 8: contact element
- 10: holding body
- 12: contact pin
- 14: plugging direction
- 16: attachment member
- 18: tip
- 20: connection section
- 22: electrical conductor
- 24: bus bar
- 26: external thread
- 28: fastening nut
- 30: passage opening
- 32: bore
- 34: internal thread
- 36: fastening screw
- 38: contact section
- 40: touch guard cap
- 42: mount section
- 44: housing
- 46: core
- 48: shell
- 50: flange
- 52: abutment surface
- 54: outer diameter
- 56: outer surface
- 58: outer side
- 60: recess
- 62: passage opening
- 64: multi-component injection-molded part
- 66: half
- 68: receptacle
- 70: hinge
- 72: contact chamber
- 74: inner wall
- 76: shoulder
- 78: connection
- 80: depression
- 82: outer surface
- 84: outer side
- 86: grip surface
- 88: touch guard collar
- 90: sealing lip
- 92: projection
- 94: sensor receptacle
- 96: recess
- 98: cavity
- 100: bottom
- 102: RFID transponder

## Claims

1. Contact assembly (1) for a plugging device (2) of a charger, wherein said contact assembly (1) is configured to be held in said plugging device (2) and to be contacted by a mating contact (6) of the charger, wherein said contact assembly (1) comprises an electrically conductive contact element (8) and a holding body (10) that surrounds said contact element (8) at least in part from the outside, wherein said holding body (10) comprises at least one other material than said contact element (8).

2. Contact assembly (1) according to claim 1, wherein said holding body (10) is attached onto said contact element (8) in torsion-proof and/or captive manner.

3. Contact assembly (1) according to claim 1 or 2, wherein said at least one material of said holding body (10) penetrates said contact element (8) at least in part.

4. Contact assembly (1) according to any one of claims 1 to 3, wherein said holding body (10) is made of plastic material.

5. Contact assembly (1) according to any one of claims 1 to 4, wherein said contact element (8) is overmolded with said the holding body (10).

6. Contact assembly (1) according to any one of claims 1 to 5, wherein said holding body (10) has a rotationally non-symmetrical outer surface (82) at least in sections.

7. Contact assembly (1) according to any one of claims 1 to 6, wherein said holding body (10) comprises at least one sealing lip (90) that extends away from said contact element (8).

8. Contact assembly (1) according to any one of claims 1 to 7, wherein said holding body (10) comprises a sensor receptacle (94) for a temperature sensor, the sensor receptacle extending toward said contact element (8) and accessible from outside.

9. Contact assembly (1) according to claim 8, wherein said sensor receptacle (94) extends through said holding body (10) up to said contact element (8).

10. Contact assembly (1) according to any one of claims 1 to 9, wherein said contact assembly comprises an RFID transponder that is located in said holding body.

11. Contact assembly (1) according to any one of claims 1 to 10, wherein said contact element (8) comprises:
- a contact section (38) for contacting said mating contact (6); and
- a connection section (28) for connecting said contact element (8) to an electrical conductor (22) of the charger,
wherein said contact section (38) and said connection section (28) are disposed on opposite sides of said contact element (8) with respect to said holding body (10).

12. Contact assembly (1) according to claim 11, wherein said connection section (28) has an external thread (26).

13. Contact assembly (1) according to any one of claims 1 to 12, wherein said contact element (8) comprises at least one flange (50) that projects beyond said holding body (10).

14. Contact bundle (4) with at least two contact assemblies (1) according to any one of claims 1 to 13, wherein said holding bodies (10) of said at least two contact assemblies (1) are connected in a positive substance-fit manner.

15. Plugging device (2) with at least one contact assembly (1) according to any one of claims 1 to 13 and a housing (44), wherein said housing (44) comprises a contact chamber (72) for receiving said at least one contact assembly (1), and wherein said holding body (10) of said at least one contact assembly (1) abuts against an inner wall (74) of said contact chamber (72).
